# FASCICULE DE BREVET EUROPEEN

(11) **EP 1 082 900 B1**
(45) Date de publication et mention de la délivrance du brevet: **08.01.2003**
(21) Numéro de dépôt: 00402455.0
(22) Date de dépôt: 06.09.2000
(51) Int. Cl.: A01M 7/00

(54) **Pulvérisateur porté pour épandre des produits phytosanitaires**
An einen Schlepper anbaubare Streuvorrichtung zum Streuen von phytosänitaren Produkten
Tractor-mounted sprayer for spraying phytosanitary products

(30) Priorité: 07.09.1999 FR 9911179
(43) Date de publication de la demande: 14.03.2001
(73) Titulaire: EXEL INDUSTRIES, 51200 Epernay (FR)
(72) Inventeur: Ballu, Patrick, 51100 Reims (FR)
(74) Mandataire: Caron, Gérard

(56) Documents cités:
- DE-A- 3 823 529
- DE-A- 4 001 196

## Description

La présente invention est relative à un pulvérisateur agricole destiné notamment à épandre des produits phytosanitaires sur la végétation.

Classiquement, les pulvérisateurs dits "portés" de ce type peuvent être accrochés de façon démontable à un engin porteur tel qu'un tracteur. Dans ce cas, le pulvérisateur comprend un châssis pourvu de moyens d'accrochage à l'engin porteur avec possibilité de réglage en hauteur pour les positions de route et de travail. Sur ce châssis sont montés une cuve réservoir et tous les organes (pompe, filtres, vannes etc.) nécessaires pour réaliser la pulvérisation. Cette dernière est effectuée par l'intermédiaire d'une rampe de pulvérisation repliable, qui est montée sur le châssis à l'arrière par rapport à la cuve dans le sens d'avancement de l'engin. En position de travail, cette rampe s'étend transversalement par rapport au châssis et sa position est réglable en hauteur grâce à des glissières verticales notamment pour régler la hauteur de travail de la rampe en fonction de la végétation.

Le porte-à-faux d'un tel pulvérisateur par rapport à l'engin porteur est relativement important. Or, les récents développements en matière phytosanitaire ont vu naître des produits permettant de diminuer le volume de produit épandu par hectare, tandis qu'en même temps on voyait s'accroître la largeur et donc le poids des rampes. Cette évolution a tendance à aggraver le problème du porte-à-faux à l'arrière de l'engin porteur en raison de l'effet cumulé du poids accru de la rampe placée à l'arrière et de la réduction du volume de liquide que doit contenir la cuve, celle-ci étant placée à l'avant sur le châssis.

La demande de brevet allemand DE 40 01 196 propose d'apporter à ce problème une solution qui est illustrée à la figure 1 des dessins annexés.

Selon cette proposition antérieure, le pulvérisateur porté comprend un châssis ayant de profil une forme en "L". Ce châssis est destiné à être accroché à un engin porteur ou tracteur par l'intermédiaire d'un ensemble d'accrochage articulé sur le châssis. Une cuve destinée à contenir le produit phytosanitaire à épandre est montée sur ce châssis.

La rampe de pulvérisation est portée par un dispositif de suspension qui comprend deux parallélogrammes déformables s'étendant parallèlement d'avant en arrière vu dans le sens d'avancement du pulvérisateur de part et d'autre de la cuve. Un actionneur de déformation est articulé sur le côté avant pour permettre le réglage de la hauteur de la rampe.

Dans ce document antérieur, on vise principalement à ménager un espace libre en dessous de la cuve, cet espace étant situé dans le sillage du tracteur afin de permettre à des plants de certaines cultures comme le blé par exemple, de se redresser avant que la rampe proprement dite les asperge de produit phytosanitaire. A cet effet, il est proposé de monter les organes nécessaires à la pulvérisation autres que la cuve, et notamment la pompe, latéralement à l'extérieur du dispositif de suspension de la rampe.

Cependant, la disposition déportée présente l'inconvénient d'exposer des organes relativement fragiles que sont la pompe et les vannes de commande et de réglage à des chocs et des salissures, et également de créer un porte-à-faux latéral sur l'ensemble de l'appareil.

Outre le fait que l'espace nécessaire pour le redressement des plants traités après passage du tracteur peut être obtenu en réglant convenablement la hauteur de la rampe, cette solution n'est donc pas satisfaisante.

La présente invention a pour but de proposer un pulvérisateur porté dépourvu des porte-à-faux à la fois latéral et arrière, dans lequel en outre les accessoires de pulvérisation tels que les organes de pompage, de commande et de réglage sont protégés contre les chocs et les salissures tout en demeurant facilement accessibles à l'opérateur.

L'invention a donc pour objet un pulvérisateur de type porté tel que défini dans les revendications 1, 2 ou 3.

Grâce à ces caractéristiques, un espace peut être aménagé dans le volume enveloppe défini par le châssis et la rampe d'une part et les bielles du dispositif de suspension d'autre part, l'absence d'une quatrième bielle d'un côté de cet espace permettant d'accéder facilement aux appareillages qui y sont disposés, tout en assurant leur protection.

D'autres particularités avantageuses de l'objet de l'invention sont définies dans les sous- revendications.

D'autres caractéristiques et avantages de l'invention apparaîtront au cours de la description qui va suivre donnée uniquement à titre d'exemple et faite en se référant aux dessins annexés sur lesquels :
- la figure 1 déjà décrite est une vue schématique en élévation latérale d'un pulvérisateur porté selon la technique antérieure;
- les figures 2 à 4A montrent par des vues schématiques en perspective, prises de l'avant et du haut plusieurs modes de réalisation du pulvérisateur selon l'invention;
- les figures 5 et 6 sont des vues en élévation latérale d'un pulvérisateur, muni d'une autre caractéristique intéressante selon l'invention, la figure 5 représentant la configuration repliée de route de la rampe et la figure 6 une configuration repliée de dégagement de la cabine de l'engin porteur;
- la figure 7 est une vue partielle en élévation latérale d'un pulvérisateur selon l'invention muni d'une autre caractéristique intéressante, la rampe n'étant pas représentée;
- la figure 8 montre une vue de détail accompagnée de deux vues agrandies de la variante représentée sur la figure 7;
- les figures 9 et 10 sont des vues latérales en élévation d'une variante de l'ensemble de suspension de la rampe d'un pulvérisateur selon l'invention, la rampe étant représentée en position dépliée, haute à la figure 9 et basse à la figure 10;
- les figures 11, 12, 11A et 12A montrent par des vues schématiques en élévation latérale d'autres variantes de réalisation du pulvérisateur selon l'invention; et
- les figures 13 et 14 sont des vues en perspective, respectivement de l'avant et de l'arrière, d'un pulvérisateur selon un mode de réalisation préféré de l'invention et présentant une synthèse des solutions préconisées dans les figures 4A et 11.

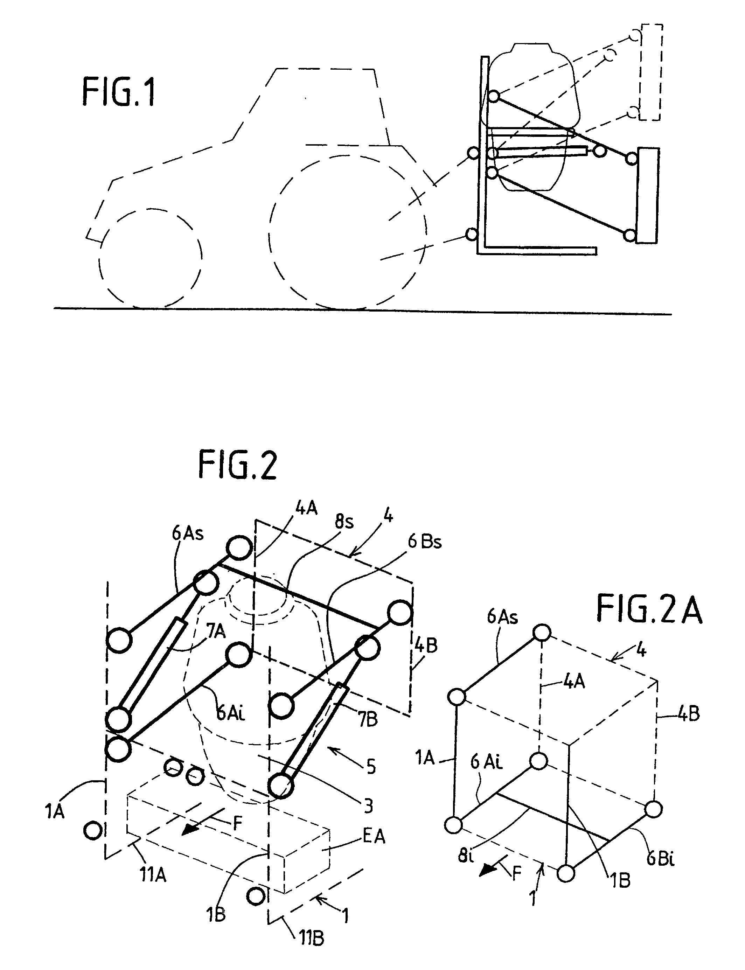

Les figures 2 à 4A représentent schématiquement plusieurs variantes possibles du dispositif de suspension 5 selon l'invention. Sur la figure 2, la cuve 3 disposée dans le volume délimité par le dispositif de suspension, est représentée en pointillés, alors qu'elle est omise pour plus de clarté sur les figures 2A à 4A.

Sur la figure 2, on voit que le dispositif de suspension 5 comprend sur un côté (ici le côté droit) une bielle supérieure 6As et une bielle inférieure 6Ai articulées toutes deux entre un montant 1A du châssis 1 et un montant 4A appartenant à la structure de la rampe 4. Ces bielles sont parallèles et forment avec les deux montants 1A et 4A un parallélogramme déformable situé dans un plan vertical longitudinal du pulvérisateur, étant entendu que la direction "longitudinale" est celle dans laquelle avance le pulvérisateur (voir flèche F).

Le dispositif de suspension 5 comprend également une troisième bielle 6Bs, ici supérieure, s'étendant parallèlement aux bielles 6As et 6Ai de l'autre côté de la cuve. Cette troisième bielle 6Bs est articulée sur un montant 1B du châssis 1 et un montant 4B appartenant à la structure de la rampe 4. Elle s'étend parallèlement aux bielles 6As et 6Ai.

Des vérins 7A et 7B sont associés respectivement au quadrilatère formé des montants 1A et 4A et les bielles 6As et 6Ai et à la troisième bielle 6Bs pour permettre la déformation du dispositif de suspension et la montée et la descente de la rampe 4.

Le dispositif de suspension comprend également une traverse supérieure 8s qui dans la présente variante, relie l'une à l'autre les bielles supérieures 6As et 6Bs.

On constate donc que le dispositif de suspension ne comporte, selon l'invention qu'une seule bielle sur l'un des côtés du dispositif de suspension. Ainsi, l'espace non occupé par la cuve 3 dans le volume délimité par le dispositif de suspension est facilement accessible et ce quelle que soit la configuration dans laquelle ce dispositif est placé. La limite inférieure de cet espace étant formée par des longerons 11A et 11B du châssis 1, il est possible d'y loger des éléments accessoires de pulvérisation (indiqués schématiquement par le parallélépipède rectangle EA), par exemple sur un plateau (non représenté) fixé sur ces longerons, ces éléments pouvant être desservis facilement par l'opérateur en toute configuration du pulvérisateur.

La figure 2A montre que l'on peut inverser la disposition de la figure 2 en remplaçant d'un côté la bielle supérieure par une bielle inférieure 6Bi et en connectant l'une à l'autre par une traverse 8i, les bielles inférieures 6Ai et 6Bi. Dans ce cas, il pourrait être avantageux de prévoir les éléments accessoires de pulvérisation au-dessus de la cuve.

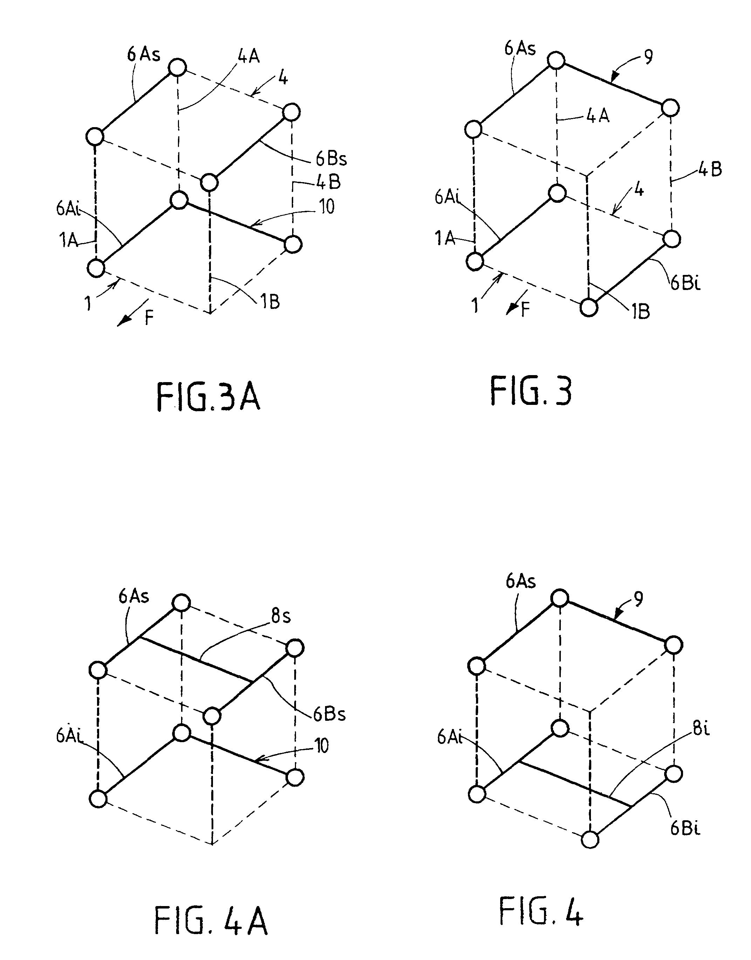

Dans les variantes des figures 3 et 3A, l'une des tringles supérieure 6As ou inférieure 6Ai forme une seule pièce en L couché avec la traverse supérieure 8s, resp. inférieure 8i. Ces pièces en L sont référencées 9 resp. 10.

Dans les variantes des figures 4 et 4A, on retrouve ces pièces en L couché 9 et 10, cependant que les autres tringles sont connectées ensemble respectivement par les traverses de liaison 8i (figure 4) et 8s (figure 4A). Bien entendu, dans chaque cas, la pièce en L peut être inversée dans le plan horizontal.

Il est à noter que, pour simplifier le dessin, les actionneurs 7A et 7B n'ont pas été représentés sur les figures 2A à 4A.

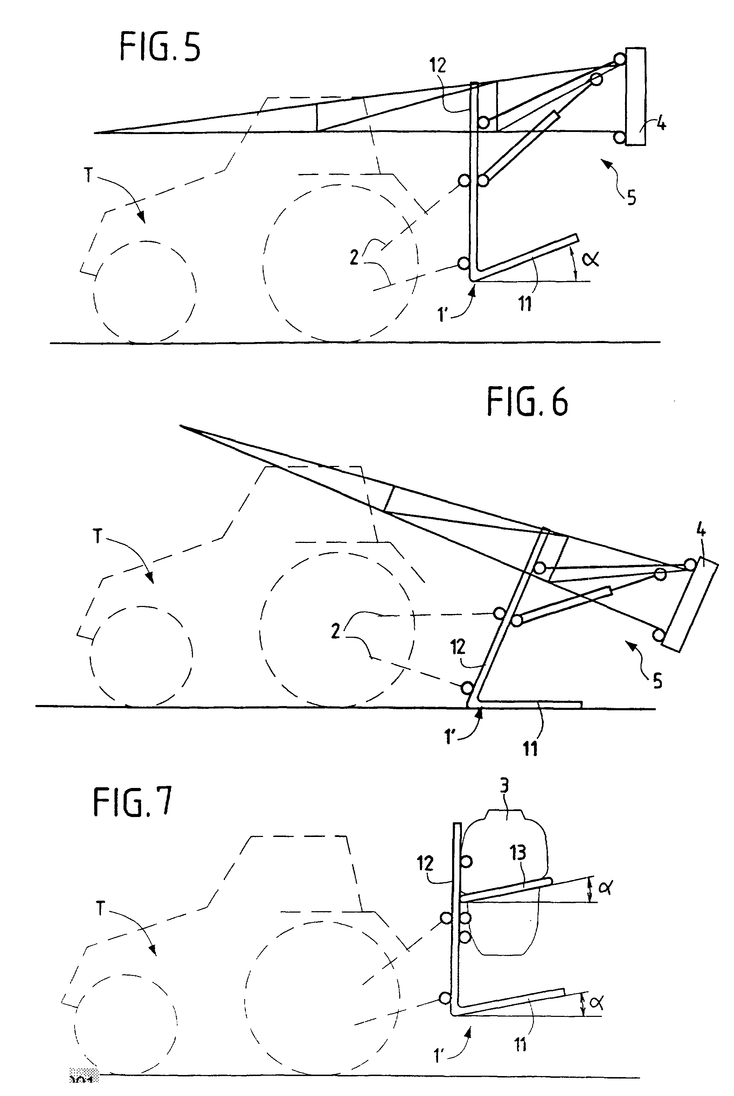

Sur la figure 2, on voit que le châssis 1 comporte deux structures latérales dont les branches verticales forment les montants 1A et 1B et dont les branches horizontales constituent les longerons 11A et 11B qui forment un angle droit avec ces montants. Les figures 5 et 6 illustrent un autre mode de réalisation de l'invention dans lequel, contrairement à la forme à angle droit des structures, les longerons 11 du châssis l'font un angle aigu avec les montants verticaux 12 de sorte qu'en position route du pulvérisateur, ils sont inclinés par rapport à l'horizontale en remontant vers l'arrière à partir de l'extrémité inférieure des montants verticaux 12. L'angle d'inclinaison α par rapport à l'horizontale est choisi de telle façon que, lorsque l'ensemble d'accrochage 2 de l'engin porteur T est abaissé, les longerons 11 puissent reposer sur le sol.

La figure 6 montre l'un des avantages qu'apporte cette solution. En effet, lorsque dans ce cas, la rampe 4 est repliée comme illustré, et que l'ensemble d'accrochage 2 est abaissé, les portes d'accès de la cabine de l'engin porteur T sont dégagées, ce qui en facilite ainsi l'accès.

Cependant, la disposition des figures 5 et 6 apporte encore les avantages suivants.

Le bas de l'appareil de pulvérisation s'inclinant vers le haut en allant vers l'arrière, les plants, tels que des tiges de blé par exemple, rabattus au passage de l'engin porteur pendant le travail de pulvérisation, ont plus de temps pour se redresser avant d'être aspergés par la pulvérisation.

En outre, lorsque après dépose, le pulvérisateur est placé sur le sol, il dispose d'une meilleure stabilité, le porte-à-faux arrière résiduel étant mieux réparti.

Enfin, la partie montante du châssis étant inclinée sur la verticale et vers l'arrière, le point de fixation haut du châssis à l'engin porteur est mieux accessible pendant la remontée de l'appareil sur celui-ci et le réglage en est donc facilité.

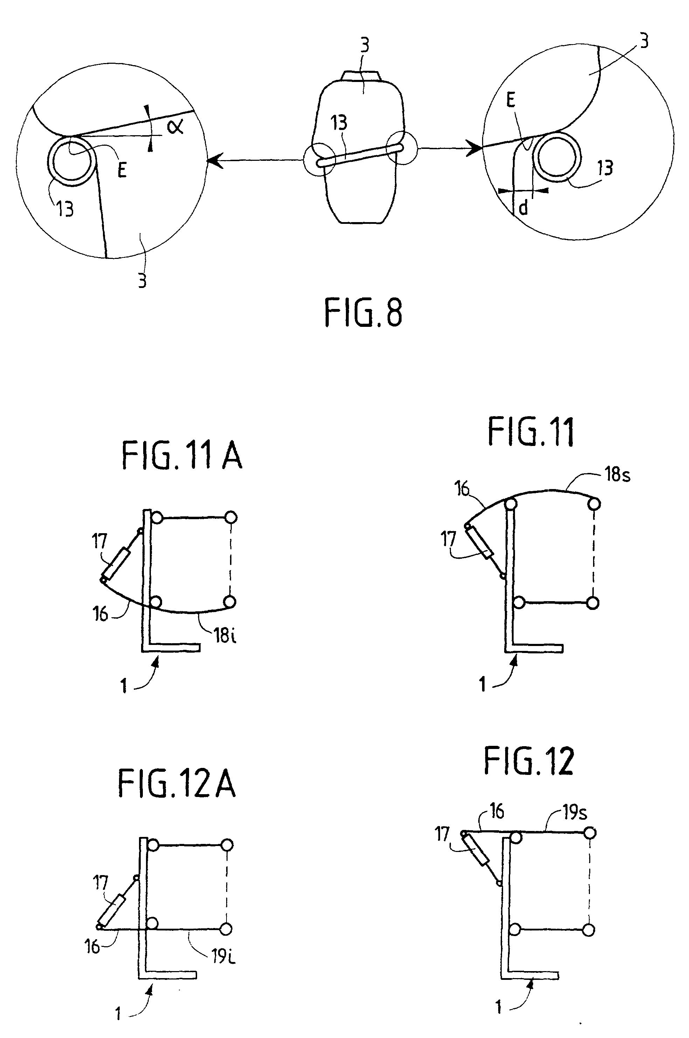

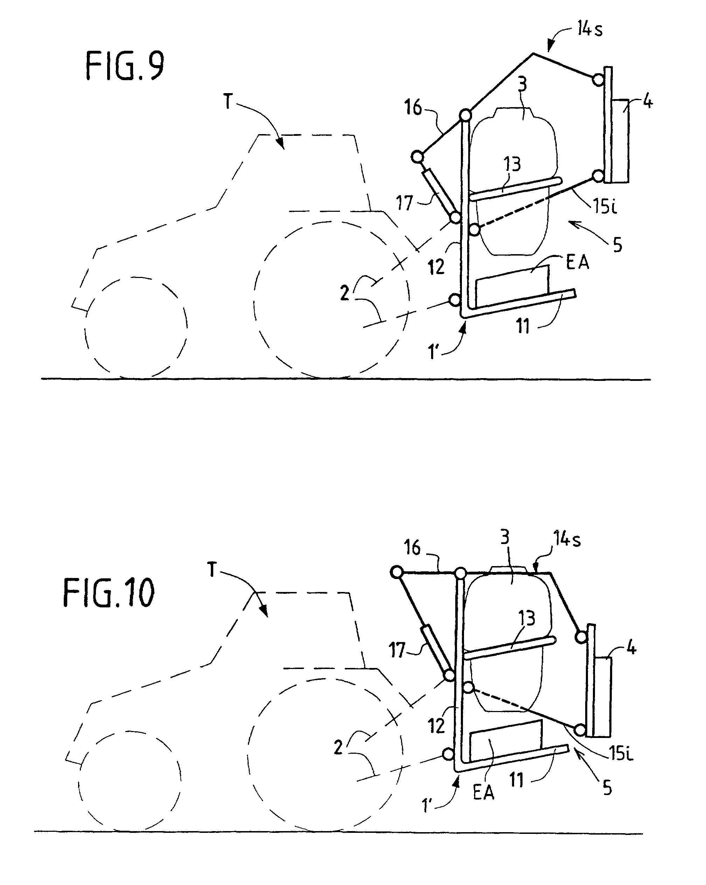

Les figures 7 et 8 illustrent un autre mode de réalisation du pulvérisateur dans lequel, dans la position route, un anneau de support 13 de la cuve 3 est disposé dans un plan incliné vers le haut et vers l'arrière par rapport au plan horizontal, le cas échéant du même angle α dont sont inclinés les longerons 11 du châssis 1'.

Cette disposition particulière de l'anneau de support 13 permet de mieux asseoir la cuve 3 dans son support que ne le permet un anneau qui ne présente pas d'inclinaison (figure 1). En effet, la cuve 3 est généralement réalisée en matière plastique par rotomoulage, procédé qui entraîne des dispersions sur les cotes dimensionnelles imposant, de conception, un jeu important entre la cuve 3 et l'anneau de support. Lorsque la cuve est vide ou peu chargée, il en résulte, pendant le travail et au cours des trajets sur route, des déplacements de la cuve dans l'anneau, ce qui provoque une usure prématurée de l'épaulement E (figure 8) par lequel la cuve repose dans l'anneau.

Ce problème est résolu avec la disposition inclinée de l'anneau de support 13 de la figure 7, la cuve 3 présentant un épaulement E d'inclinaison correspondante. De cette manière, la cuve ainsi modifiée cherchera toujours la position la plus basse possible. La figure 8 illustre ce phénomène par des vues détaillées agrandies, la partie arrière de la cuve étant dégagée de l'anneau de support d'une distance d correspondant au jeu rattrapé.

Les figures 9 à 11A montrent d'autres variantes de réalisation de l'invention dans lesquelles il est prévu un dispositif de suspension 5 dont certaines bielles sont de forme coudée ou cintrée.

Ainsi, sur les figures 9 et 10, les bielles supérieures 14s sont coudées d'un angle obtus dont le sommet pointe vers le haut, l'unique bielle inférieure 15i étant droite. Les bielles 14s se prolongent vers l'avant au-delà du châssis 1' pour former des bras de levier 16 auxquels peuvent être articulés les actionneurs 17 situés, dans ce cas également, à l'avant du châssis 1'. Les bielles 14s peuvent être articulées aux montants 12 et à la rampe 4 comme représenté ou, en variante, l'articulation avant peut être située dans le coude de chaque bielle. Selon d'autres variantes, le sommet de l'angle obtus peut pointer vers le bas et/ou les bielles coudées peuvent être situées en bas au lieu d'en haut.

Les figures 9 et 10 montrent l'ensemble d'accessoires de pulvérisation EA disposé sur les longerons 11 du châssis en étant facilement accessible grâce à l'absence d'une bielle inférieure du côté gauche du dispositif de suspension 5.

Les figures 11 et 11A montrent des variantes correspondantes avec des bielles 18s et 18i cintrées. Ces bielles peuvent être concaves vers le haut ou vers le bas.

Les agencements des figures 9, 10 et 11 permettent de ménager de la place pour la cuve 3 de telle façon que sa partie supérieure puisse être agrandie et contenir davantage de liquide abaissant ainsi son centre de gravité.

Comme l'illustre la figure 10, le volume de la cuve 3 n'interfère pas avec la déformation du dispositif de suspension 5, même en position abaissée de la rampe 4.

Bien entendu, cette forme de dispositif de suspension peut également être utilisée dans les variantes représentées sur les figures 2 à 8.

Les figures 12 et 12A montrent que des bielles 19s resp. 19i prolongées vers l'avant au-delà du châssis 1 peuvent également avoir une forme droite.

Dans toutes les variantes dans lesquelles on prévoit une bielle prolongée vers l'avant, l'actionneur 17 peut être situé en avant du châssis ce qui diminue d'autant l'influence du porte-à-faux du pulvérisateur.

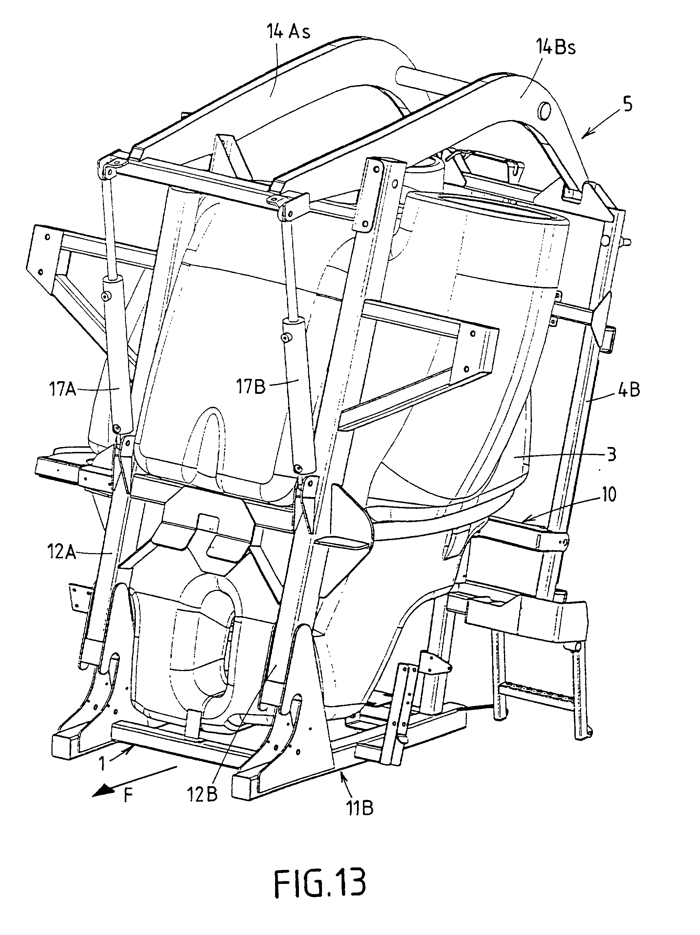

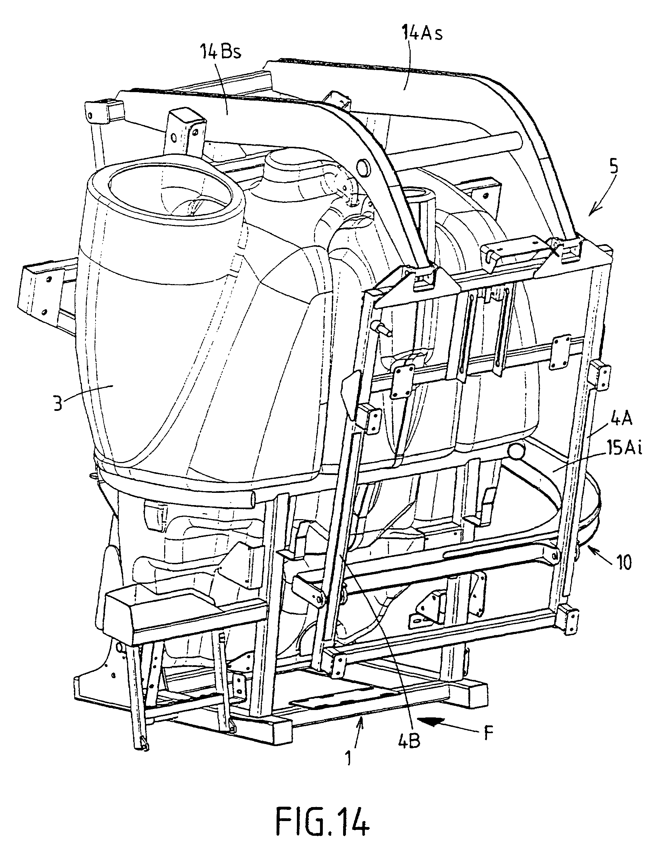

Les figures 13 et 14 montrent un exemple de réalisation d'un dispositif de suspension 5 réunissant les caractéristiques des variantes des figures 4A et 11. Dans ces figures les éléments situés respectivement à droite et à gauche du dispositif de suspension 5 ont de nouveau été affectés de références suivies des suffixes A et B pour les situer, à l'image de la figure 2 par exemple.

## Revendications

1. Pulvérisateur de type porté comprenant un châssis (1; 1') destiné à être monté sur un engin porteur (T) et portant une cuve (3) de produit à épandre et des accessoires de pulvérisation (EA) assurant l'alimentation en produit phytosanitaire à partir de la cuve (3) vers une rampe de pulvérisation (4), celle-ci étant montée mobile en hauteur sur ledit châssis (1; 1') derrière ladite cuve par l'intermédiaire d'un dispositif de suspension (5) réglable par au moins un actionneur (7A, 7B; 17), ledit dispositif de suspension (5) comprenant d'un côté des première et deuxième bielles parallèles articulées (6As, 6Ai) formant avec ledit châssis (1; 1') et ladite rampe (4) un parallélogramme déformable dans un plan vertical longitudinal du pulvérisateur, **caractérisé en ce qu'**il est prévu de l'autre côté une troisième bielle unique (6Bi; 6Bs) articulée sur ledit châssis et ladite rampe et s'étendant parallèlement aux première et deuxième bielles dudit parallélogramme déformable, ladite troisième bielle étant réunie à ce dernier par une traverse de renforcement (8s; 8i).

2. Pulvérisateur de type porté comprenant un châssis (1; 1') destiné à être monté sur un engin porteur (T) et portant une cuve (3) de produit à épandre et des accessoires de pulvérisation (EA) assurant l'alimentation en produit phytosanitaire à partir de la cuve (3) vers une rampe de pulvérisation (4), celle-ci étant montée mobile en hauteur sur ledit châssis (1; 1') derrière ladite cuve par l'intermédiaire d'un dispositif de suspension (5) réglable par au moins un actionneur (7A, 7B; 17), ledit dispositif de suspension (5) comprenant d'un côté des première et deuxième bielles parallèles articulées (6As, 6Ai) formant avec ledit châssis (1; 1') et ladite rampe (4) un parallélogramme déformable dans un plan vertical longitudinal du pulvérisateur, **caractérisé en ce que** ledit dispositif de suspension (5) comprend, de l'autre côté, trois points d'articulation dont deux sont reliés ensemble par une troisième bielle unique (6Bi; 6Bs) et situés l'un sur ledit châssis et l'autre sur ladite rampe, ladite troisième bielle s'étendant parallèlement aux première et deuxième bielles (6Ai, 6As) dudit parallélogramme déformable, le troisième desdits points d'articulation étant connecté d'une part à ladite rampe et d'autre part audit parallélogramme déformable par une traverse de renforcement qui est faite d'une seule pièce avec l'une ou l'autre desdits première et deuxième bielles en formant avec cette dernière une pièce couchée en L (9;10)

3. Pulvérisateur de type porté comprenant un châssis (1; 1') destiné à être monté sur un engin porteur (T) et portant une cuve (3) de produit à épandre et des accessoires de pulvérisation (EA) assurant l'alimentation en produit phytosanitaire à partir de la cuve (3) vers une rampe de pulvérisation (4), celle-ci étant montée mobile en hauteur sur ledit châssis (1; 1') derrière ladite cuve par l'intermédiaire d'un dispositif de suspension (5) réglable par au moins un actionneur (7A, 7B; 17), ledit dispositif de suspension (5) comprenant d'un côté des première et deuxième bielles parallèles articulées (6As, 6Ai) formant avec ledit châssis (1; 1') et ladite rampe (4) un parallélogramme déformable dans un plan vertical longitudinal du pulvérisateur, **caractérisé en ce qu'**il est prévu de l'autre côté une troisième bielle unique (6Bi; 6Bs) articulée sur ledit châssis (1) et ladite rampe (4) et s'étendant parallèlement aux première et deuxième bielles (6As, 6Ai) dudit parallélogramme déformable, ladite troisième bielle (6Bs) étant réunie à l'une des bielles parmi lesdites première et seconde bielles par une traverse de renforcement (8s; 8i) et **en ce que** l'autre desdites première et seconde bielles forme une pièce en L (9, 10) avec une barre transversale articulée sur ladite rampe (4) par un point d'articulation se trouvant du même côté du dispositif de suspension que ladite troisième bielle (6Bs, 6Bi).

4. Pulvérisateur suivant l'une quelconque des revendications 1 à 3, **caractérisé en ce que** ladite troisième bielle et la bielle parmi lesdites première et seconde bielles se trouvant au même niveau horizontal que ladite troisième bielle (14s; 18s; 18i) sont prolongées vers l'avant du pulvérisateur (16) au-delà dudit châssis (1) et **en ce que** lesdits actionneurs (17) sont articulés sur l'extrémité avant desdites bielles prolongées (14s; 18s; 18i).

5. Pulvérisateur suivant la revendication 4, **caractérisé en ce que** lesdites bielles prolongées sont droites, coudées ou cintrées (14s; 18s; 18i).

6. Pulvérisateur suivant la revendication 5, **caractérisé en ce que**, lesdites bielles étant coudées ou cintrées, leur concavité est dirigée vers le bas (18s) ou vers le haut (14s; 18i).

7. Pulvérisateur suivant l'une quelconque des revendications précédentes, **caractérisé en ce que** ledit châssis (1; 1') se présente en profil sous la forme d'un L dont la grande branche (1A, 1B; 12) est verticale et accrochée sur ledit engin porteur (T) et dont la petite branche (11) s'étend vers l'arrière et supporte lesdits accessoires de pulvérisation, tels qu'une pompe des vannes et analogues (EA).

8. Pulvérisateur suivant la revendication 7, **caractérisé en ce que** les branches (1A, 1B)) du L sont à angle droit.

9. Pulvérisateur suivant la revendicatio 7 ou 8, **caractérisé en ce que** la branche (11) du châssis (1') s'étendant vers l'arrière est inclinée sur l'horizontale en s'étendant vers le haut.

10. Pulvérisateur suivant l'une quelconque des revendications précédentes, **caractérisé en ce qu'**il comprend un anneau (13) de support de cuve solidaire dudit châssis (1') et incliné sur l'horizontale en s'étendant vers le haut et vers l'arrière et **en ce que** ladite cuve (3) comporte un épaulement de support périphérique (E) de même inclinaison.

## Patentansprüche

1. Streuvorrichtung vom Anbautyp, umfassend eine Halterung (1; 1') bestimmt zum Anbau an einen Schlepper (T), die einen Behälter (3) für das zu streuende Produkt und Streuhilfsaggregate (EA) trägt, welche den Nachschub an phytosanitärem Produkt aus dem Behälter (3) zu einem Streugestell (4) sicherstellen, das in der Höhe beweglich hinter dem Behälter mittels einer Aufhängevorrichtung (5), die mit mindestens einem Stellantrieb (7A, 7B; 17) verstellbar ist, an der Halterung (1; 1') angebracht ist, wobei diese Aufhängevorrichtung (5) an einer Seite erste und zweite parallele ineinandergefügte Wellen (6As, 6Ai) umfasst, die mit der Halterung (1; 1') und dem Gestell (4) ein in einer senkrecht längslaufenden Ebene der Streuvorrichtung verformbares Parallelogramm bilden, **dadurch gekennzeichnet, daß** auf der anderen Seite eine dritte, einzelne Welle (6Bi, 6Bs) vorgesehen ist, ineinandergefügt auf der Halterung und dem Gestell, die sich parallel zu der ersten und der zweiten Welle des verformbaren Parallelogramms erstreckt, wobei die dritte Welle mit letzterem mittels eines Verstärkungsquerträgers (8s; 8i) verbunden ist.

2. Streuvorrichtung vom Anbautyp, umfassend eine Halterung (1; 1') bestimmt zum Anbau an einen Schlepper (T), die einen Behälter (3) für das zu streuende Produkt und Streuhilfsaggregate (EA) trägt, welche den Nachschub an phytosanitärem Produkt aus dem Behälter (3) zu einem Streugestell (4) sicherstellen, das in der Höhe beweglich hinter dem Behälter mittels einer Aufhängevorrichtung (5), die mit mindestens einem Stellantrieb (7A, 7B; 17) verstellbar ist, an der Halterung (1; 1') angebracht ist, wobei diese Aufhängevorrichtung (5) an einer Seite erste und zweite parallele ineinandergefügte Wellen (6As, 6Ai) umfasst, die mit der Halterung (1; 1') und dem Gestell (4) ein in einer senkrecht längslaufenden Ebene der Streuvorrichtung verformbares Parallelogramm bilden, **dadurch gekennzeichnet, daß** die Aufhängevorrichtung (5) auf der anderen Seite drei Gelenkpunkte umfasst, von denen zwei durch eine dritte, einzelne Welle (6Bi, 6Bs) miteinander verbunden sind und von denen einer an der Halterung, der andere an dem Gestell angebracht ist, wobei die dritte Welle sich parallel zu der ersten und zweiten Welle (6Ai, 6As) des verformbaren Parallelogramms erstreckt, und der dritte der Gelenkpunkte einerseits mit dem Gestell und andererseits mit dem verformbaren Parallelogramm mittels eines Verstärkungsquerträgers verbunden ist, welcher zusammen mit der einen oder der anderen der ersten oder der zweiten Welle aus einem Stück hergestellt ist, so daß er mit dieser letzteren ein L-förmiges Teil bildet.

3. Streuvorrichtung vom Anbautyp, umfassend eine Halterung (1; 1') bestimmt zum Anbau an einen Schlepper (T), die einen Behälter (3) für das zu streuende Produkt und Streuhilfsaggregate (EA) trägt, welche den Nachschub an phytosanitärem Produkt aus dem Behälter (3) zu einem Streugestell (4) sicherstellen, das in der Höhe beweglich hinter dem Behälter mittels einer Aufhängevorrichtung (5), die mit mindestens einem Stellantrieb (7A, 7B; 17) verstellbar ist, an der Halterung (1; 1') angebracht ist, wobei diese Aufhängevorrichtung (5) an einer Seite erste und zweite parallele ineinandergefügte Wellen (6As, 6Ai) umfasst, die mit der Halterung (1; 1') und dem Gestell (4) ein in einer senkrecht längslaufenden Ebene der Streuvorrichtung verformbares Parallelogramm bilden, **dadurch gekennzeichnet, daß** auf der anderen Seite eine dritte, einzelne Welle (6Bi, 6Bs) vorgesehen ist, ineinandergefügt auf der Halterung und dem Gestell, die sich parallel zu der ersten und der zweiten Welle (6As, 6Ai) des verformbaren Parallelogramms erstreckt, wobei die dritte Welle (6Bs) mit einer der Wellen, ausgewählt aus der ersten und der zweiten Welle, mittels eines Verstärkungsquerträgers (8s; 8i) verbunden ist, und daß die andere der ersten und zweiten Wellen ein L-förmiges Stück (9,10) mit einem Querträger bildet, der mittels eines Gelenkpunktes, der sich auf der selben Seite der Aufhängevorrichtung wie die dritte Welle (6Bs, 6Bi) befindet, an dem Gestell (4) befestigt ist.

4. Streuvorrichtung gemäß einem der Ansprüche 1 bis 3, **dadurch gekennzeichnet daß** die dritte Welle und die Welle ausgewählt aus der ersten und der zweiten Welle, die sich auf der gleichen waagrechten Höhe wie die dritte Welle (14s; 18s; 18i) befindet, in Richtung der Vorderseite der Streuvorrichtung (16) jenseits der Halterung (1) verlängert sind, und daß die Stellantriebe (17) an dem äußersten Ende vor den verlängerten Wellen (14s; 18s; 18i) angebracht sind.

5. Streuvorrichtung gemäß dem Anspruch 4, **dadurch gekennzeichnet daß** die verlängerten Wellen gerade, gekrümmt oder gebogen sind.

6. Streuvorrichtung gemäß dem Anspruch 5, **dadurch gekennzeichnet daß** die Konkavseite der verlängerten Wellen, die gekrümmt oder gebogen sind, nach unten (18s)oder nach oben (14s; 18i) gerichtet ist.

7. Streuvorrichtung gemäß einem der vorhergehenden Ansprüche, **dadurch gekennzeichnet, daß** die Halterung (1; 1') sich in der Seitenansicht in der Form eines L's zeigt, dessen großer Schenkel (1A, 1B; 12) senkrecht und an dem Schlepper (T) aufgehängt ist, und dessen kleiner Schenkel (11) sich nach hinten erstreckt und die Streuhilfsaggregate, wie eine Ventilpumpe und Entsprechendes (EA), trägt.

8. Streuvorrichtung gemäß Anspruch 7, **dadurch gekennzeichnet daß** die Schenkel (1A, 1B) des L's rechtwinklig zueinander sind.

9. Streuvorrichtung gemäß Anspruch 7 oder 8, **dadurch gekennzeichnet daß** der Schenkel (11) der Halterung (1'), der sich nach hinten erstreckt, gegenüber der Waagerechten geneigt ist, indem er sich nach oben erstreckt.

10. Streuvorrichtung gemäß einem der vorhergehenden Ansprüche, **dadurch gekennzeichnet, daß** er einen Tragering (13) für den Behälter umfasst, der mit der Halterung (1') verbunden ist, und gegenüber der Waagrechten geneigt ist, indem er sich nach oben und nach hinten erstreckt, und daß der Behälter (3) eine äußere Trägerwölbung (E) mit der gleichen Neigung aufweist.

## Claims

1. A sprayer of the type that is carried by a machine, comprising a frame (1; 1') intended to be mounted on a carrier machine (T) and carrying a tank (3) of product to be sprayed and spraying accessories (EA) for feeding phytosanitary product from the tank (3) to a spray manifold (4) mounted so that it can be moved in the heightwise direction on said frame (1; 1') behind said tank by a suspension device (5) adjustable by at least one actuator (7A, 7B; 17), said suspension device (5) comprising on one side first and second parallel articulated links (6As, 6Ai) forming with said frame (1; 1') and said manifold (4) a deformable parallelogram in a longitudinal vertical plane of the sprayer, **characterized in that** it is provided on the other side with a single third link (6Bi; 6Bs) articulated to said frame and said manifold and extending parallel to the first and second links of said deformable parallelogram, to which said third link is joined by a reinforcing crossmember (8s; 8i).

2. A sprayer of the type that is carried by a machine, comprising a frame (1; 1') intended to be mounted on a carrier machine (T) and carrying a tank (3) of product to be sprayed and spraying accessories (EA) for feeding phytosanitary product from the tank (3) to a spray manifold (4) mounted so that it can be moved in the heightwise direction on said frame (1; 1') behind said tank by a suspension device (5) adjustable by at least one actuator (7A, 7B; 17), said suspension device (5) comprising on one side first and second parallel articulated links (6As, 6Ai) forming with said frame (1; 1') and said manifold (4) a deformable parallelogram in a longitudinal vertical plane of the sprayer, **characterized in that** said suspension device (5) comprises, on the other side, three articulation points of which two are connected together by a single third link (6Bi; 6Bs) and one of which is situated on said frame and the other on said manifold, said third link extending parallel to the first and second links (6Ai; 6As) of said deformable parallelogram, the third of said articulation points being connected on the one hand to said manifold and on the other hand to said deformable parallelogram by a reinforcing crossmember which is in one piece with one or the other of said first and second links, forming with the latter an L-shaped part (9; 10) lying in a horizontal plane.

3. A sprayer of the type that is carried by a machine, comprising a frame (1; 1') intended to be mounted on a carrier machine (T) and carrying a tank (3) of product to be sprayed and spraying accessories (EA) for feeding phytosanitary product from the tank (3) to a spray manifold (4) mounted so that it can be moved in the heightwise direction on said frame (1; 1') behind said tank by a suspension device (5) adjustable by at least one actuator (7A, 7B; 17), said suspension device (5) comprising on one side first and second parallel articulated links (6As, 6Ai) forming with said frame (1; 1') and said manifold (4) a deformable parallelogram in a longitudinal vertical plane of the sprayer, **characterized in that** it is provided on the other side with a single third link (6Bi; 6Bs) articulated to said frame (1) and said manifold (4) and extending parallel to the first and second links (6As; 6Ai) of said deformable parallelogram, said third link (6Bs) being joined to said first link or said second link by a reinforcing crossmember (8s; 8i) and **in that** the other of said first and second links forms an L-shape part (9, 10) with a transverse bar articulated to said ramp (4) by an articulation point on the same side of the suspension device as said third link (6Bs, 6Bi).

4. A sprayer according to any of claims 1 to 3, **characterized in that** said third link and said first or second link at the same horizontal level as said third link (14s; 18s; 18i) are extended toward the front of the sprayer (16) beyond said frame (1) and **in that** said actuators (17) are articulated to the front end of said extended links (14s; 18s; 18i).

5. A sprayer according to claim 4, **characterized in that** said extended links are straight, cranked or curved (14s; 18s; 18i).

6. A sprayer according to claim 5, **characterized in that**, when said links are cranked or curved, their concave side is directed downward (18s) or upward (14s; 18i).

7. A sprayer according to any preceding claim, **characterized in that** said frame (1; 1') has an L-shaped profile with the longer branch (1A, 1B; 12) vertical and attached to said carrier machine (T) and the shorter branch (11) extending toward the rear and supporting said spraying accessories (EA), such as a pump, valves and the like.

8. A sprayer according to claim 7, **characterized in that** the branches (1A, 1B) of the L-shape are at right angles.

9. A sprayer according to claim 7 or 8 **characterized in that** the branch (11) of the frame (1') extending toward the rear is upwardly inclined to the horizontal.

10. A sprayer according to any preceding claim, **characterized in that** it comprises a tank support ring (13) fastened to said frame (1') and upwardly and rearwardly inclined to the horizontal and **in that** said tank (3) includes a peripheral support shoulder (E) with the same inclination.
